**Europäisches Patentamt**

**European Patent Office**

**Office européen des brevets**

(19)

(11) Veröffentlichungsnummer: **0 286 630**
**A1**

(12) **EUROPÄISCHE PATENTANMELDUNG**

(21) Anmeldenummer: **88890087.5**

(22) Anmeldetag: **08.04.88**

(51) Int. Cl.4: **C 02 F 3/34**
C 02 F 3/10, C 02 F 3/12,
C 02 F 3/04

(30) Priorität: **10.04.87 AT 905/87**

(43) Veröffentlichungstag der Anmeldung:
**12.10.88 Patentblatt 88/41**

(84) Benannte Vertragsstaaten:
**AT BE CH DE ES FR GB GR IT LI LU NL SE**

(71) Anmelder: **SOLVAY OSTERREICH Gesellschaft m.b.H.**
**Parkring 12**
**A-1015 Wien (AT)**

(72) Erfinder: **Messner, Kurt, Univ.Doz. Dr.**
**Neuwaldeggerstrasse 16/3/7**
**A-1170 Wien (AT)**

**Ertler, Gerhard, Dipl.-Ing.**
**Strohberggasse 18-20/3/1**
**A-1120 Wien (AT)**

**Jaklin-Farcher, Susanne, Dipl.-Ing.Dr.**
**Franz Koci-Strasse 6/15/5/29**
**A-100 Wien (AT)**

(74) Vertreter: **Pfeifer, Otto, Dipl.-Ing. et al**
**Fleischmanngasse 9**
**A-1040 Wien (AT)**

(54) **Verfahren zum Abbau von Lignin und/oder chlorierte organische Verbindungen enthaltenden Abwässern durch Weissfäulepilze.**

(57) Ein Verfahren zum Abbau von Lignin und/oder chlorierte organische Verbindungen enthaltenden Abwässern, insbesondere Bleichereiabwässern von Zellstoffabriken, durch Weißfäulepilze, zeichnet sich dadurch aus, daß Weißfäulepilze, bevorzugt Phanerochaete chrysosporium, in einem porösen Trägermaterial, vorzugsweise Schaumstoffwürfeln, vorkultiviert werden und anschließend das die kultivierten Pilze enthaltende Trägermaterial mit den abzubauenden Substanzen in Kontakt gebracht wird.

EP 0 286 630 A1

**Beschreibung**

Die vorliegende Erfindung bezieht sich auf ein Verfahren zum Abbau von Lignin und/oder chlorierte organische Verbindungen enthaltenden Abwässern, insbesondere Bleichereiabwässern von Zellstoffabriken, durch Weißfäulepilze.

Im Rahmen der wasserwirtschaftlichen Gesetzgebung werden in verschiedenen Ländern Europas den Zellstoffabriken Mindestanforderungen hinsichtlich der maßgebendsten Kenngröße des Frachtenabstoßes, dem chemischen Sauerstoffbedarf(CSB-Wert ),gestellt. Die Einhaltung dieses Wertes erfordert vielfach die Inbetriebnahme biologischer Reinigungsanlagen. Als besonders problematisch erweisen sich in derartigen Anlagen die aus der Bleiche stammenden Frachtenabstöße. Sie enthalten zum Teil hochmolekulare chromophore Ligninverbindungen, die dem Abbau durch Bakterien weitgehend widerstehen und zu einer dunkelbraunen Färbung des Abwassers führen. Im Falle der Chlorbleiche entstehen außerdem chlorierte organische Verbindungen mit teilweise hohem Toxizitätsgrad. Der Gehalt der Abwässer an organisch gebundenem Chlor (AOX-Wert) wird in näherer Zukunft ebenfalls einer gesetzlichen Regelung unterliegen; auch die Farbe des Abwassers soll Bestandteil der Mindestanforderungen werden.

Einen eventuellen Ausweg aus der Problematik der chlorierten organischen Verbindungen stellt die Bleiche mit Sauerstoff, Wasserstoffperoxid bzw. Ozon dar. In der einschlägigen Literatur wird jedoch die Meinung vertreten, daß die Versuche mit Sauerstoff in der Bleiche von Sulfitzellstoffen keinen qualitativ ausreichenden Papierzellstoff ergeben.

Es muß daher nach neuen Verfahren gesucht werden, die neben der Senkung des CSB-Wertes zu einer Dechlorierung und Spaltung der chromophoren Verbindungen führen, wenn weiterhin ein Einsatz von Chlor in der Bleich ermöglicht werden soll.

Sowohl in aeroben als auch in anaeroben Reinigungsanlagen wird der Abbau der organischen Substanzen hauptsächlich durch Bakterien bewirkt. Diese sind jedoch, wie Laborversuche und die Erfahrungen aus der Praxis zeigen, nicht in der Lage, Ligninmoleküle mit höherem Molekulargewicht abzubauen. Als Grund dafür werden sterische Behinderungen angegeben. Auf Grund von aeroben Laborversuchen wurden als obere Grenze der Abbaubarkeit 850 Dalton angegeben, während in anaeroben Reaktoren auch ein Abbau einer Abwasserfraktion zwischen 1000 und 10 000 Dalton stattfand. Ein beträchtlicher Anteil des chromophoren Materials sowie des CSB war jedoch in der Fraktion mit einem Molekulargewicht größer als 100 000 enthalten.

Die in der Praxis in Belebungsanlagen zu beobachtende Farbreduktion ist im wesentlich auf Absorption an Mikroorganismen im Belebtschlamm zurückzuführen.

Der Hauptanteil der chlorierten organischen Verbindungen aus der alkalischen Extraktionsstufe der Bleiche sind Chlorlignine sowie niedermolekulare chlorierte Phenole, z.B. Trichlorphenol, Chlorguaiacol, Chlorvanillin, Carboxy-o-chinon, Muconolacton . Für einige wurde toxische, mutagene und/oder karzinogene Wirkung nachgewiesen.

Die bei Belebungsverfahren erreichte Entfernung von 50% AOX aus dem Abwasser ist entsprechend der Farbreduktion hauptsächlich auf eine Inkorporation in den Belebtschlamm zurückzuführen.

Zur Entfernung von biologisch nicht reduzierbarem CSB und AOX werden auch physikalisch-chemische Abwasserreinigungsverfahren wie Fällung, Adsorption und Ultrafiltration vorgeschlagen. Dadurch wird das Problem aber nicht beseitigt, sondern nur auf eine andere Ebene verlagert.

Im Idealfalle sollten die makromolekularen chromophoren Chlorlignine durch Mikroorganismen abgebaut werden. Dazu sind folgende drei prinzipielle enzymatische Abbauschritte notwendig:
- Depolymerisation
- Ringspaltung
- Dechlorierung

Wie bereits erwähnt, sind Bakterien zur Depolymerisation nur unzureichend im Stande, sodaß eine weitere Ringspaltung und Dechlorierung nicht ermöglicht wird. Die Dechlorierung wird nach Literaturangaben im aeroben Milieu erst im Tricarbonsäurezyklus nach erfolgter Ringspaltung durchgeführt.

Die Komplexität dieser enzymatischen Reaktionen schließt den Einsatz isolierter Enzyme weitgehend aus und erfordert vielmehr das Vorhandensein lebender Organismen.

Das vollständigste Enzymsystem zum Abbau polymeren Lignins ist bei Weißfäulepilzen zu finden. Unter ihnen ist Phanerochaete chrysosporium auf Grund seiner Eigenschaften von größtem Interesse für eine biotechnologische Nutzung.

Die Charakteristika von Phanerochaete chrysosporium sind wie folgt:
Wachstum: -Optimaltemperatur: 38° - 40°C (reduzierte Gefahr der Fremdinfektion; rasches Wachstum)
- intensive asexuelle Sporenbildung (einfache Beimpfung des Reaktors)
Ligninabbau: - Ligninabbau im Sekundärmetabolismus (bei N- oder C-Defizienz).
- Lignin als alleinige C-Quelle nicht verwertbar
- bester Abbau bei pH 4,5-5,0
- hohe "Ligninase"-Aktivität
- wenige phenoloxidierende Enzyme (keine Kondensationsreaktionen des Lignins
- Ligninasesystem wirkt unspezifisch auf verschiedene Lignine (auch Chlorlignine)
- oxidativer Abbau (starke Belüftung bzw. $O_2$Zufuhr notwendig)
- empfindlich auf intensive Bewegung im Flüssigmedium.

Basierend auf diesen Eigenschaften wurde von Chang, Joyce und Kirk ein Verfahren zum Abbau von organischen Chlorverbindungen in Abwässern entwickelt, das in der US-A-4 554 075 näher beschrieben wird. Dieses Verfahren wird technisch in einem "Rotating Biological Contactor" (RBC) durchgeführt. In diesem "Fixed Film"-Reaktor ist die Biomasse auf rotierenden Plexiglasscheiben fixiert, die zu etwa 40% in das mit Nährlösung versehene Abwasser tauchen. Durch langsames Drehen der Scheiben wird ein enger Kontakt des Pilzes mit dem Medium und der Gasphase bei der erforderlichen geringen Bewegung gewährleistet. Der Reaktor enthält beispielsweise 2,5 l Medium und ist in 4 Kammern, die miteinander in Verbindung stehen, geteilt. In jeder Kammer befinden sich 2 Scheiben. Der Reaktor ist durch einen Deckel verschlossen. Die Konzentration des Stickstoffes ist so gewählt, daß er nach einer viertägigen Anwachsphase verbraucht ist und das Mycel in die sekundäre, ligninolytische Phase übergeht. Als C-Quelle können Zucker oder auf den Scheiben befestigte Zellstoffblätter dienen. Nach vier Tagen wird das Nährmedium gegen ein N-armes Medium ausgetauscht und Lignin zugegeben. Eine Zugabe von Veratrylalkohol und Tween 80 erweist sich als vorteilhaft. Vom Zeitpunkt der Ligninzugabe an wird mit $O_2$ belüftet (6 l pro h). Die Messung der Farbe erfolgt jeweils nach 24 Stunden bei 465 nm.

Als vorteilhaft erweist sich in diesem bekannten Verfahren die leichte Entfernbarkeit des verbrauchten Mycels von den Scheiben. Nachteilig ist hingegen, daß das Mycel in einer dicken Schicht vorliegt und das Mycel nur zu 40% in ständigem Kontakt mit der abzubauenden Substanz steht. Als erhebliche Einschränkung dieses bekannten Verfahrens ist das schlechte Oberflächen/Volumsverhältnis zu werten; außerdem ist eine starke Bewegung wegen der Scherkräfte nicht möglich.

Ein ähnliches Verfahren zum Abbau von in der Umwelt persistenten organischen Verbindungen, insbesondere halogenierten Kohlenwasserstoffen unter Einsatz von Phanerochaete chrysosporium wird in der EP-A1- 0 192 237 beschrieben. Spezielle Angaben bezüglich der Kultivation des Pilzes und dessen Anwendung finden sich nur im Zusammenhang mit Laborversuchen.

Es wurde nun gefunden, daß die Abbauleistung von Weißfäulepilzen erheblich dadurch verbessert werden kann, daß die Kultivation der Pilze in einem porösem Trägermaterial erfolgt und dieses anschließend mit der abzubauenden Substanz in Kontakt gebracht wird.

Gegenstand der vorliegenden Erfindung ist somit ein Verfahren der eingangs genannten Art, das sich dadurch auszeichnet, daß Weißfäulepilze, bevorzugt Phanerochaete chrysosporium, in einem porösen Trägermaterial, vorzugsweise Schaumstoffwürfeln, vorkultiviert werden und anschließend das die kultivierten Pilze enthaltende Trägermaterial mit den abzubauenden Substanzen in Kontakt gebracht wird.

Das erfindungsgemäße Verfahren weist somit die folgenden Schritte auf:

1.) Kultivation des Pilzes im porösen Trägermaterial: Das poröse Trägermaterial, vorzugsweise Schaumstoffwürfel, wird mit einer Nährlösung, welche ein Inokulum des Pilzes enthält (Sporen oder Hyphenstücke), getränkt. Die Nährstoffzusammensetzung wird so gewählt, daß der Pilz nach einer kurzen Wachstumsphase diese weitgehend einstellt und in die sekundäre, ligninabbauende Phase übergeht. Bis zu diesem Zeitpunkt (etwa 4 Tage) wird das poröse Trägermaterial vom Pilzmycel intensiv durchwachsen. Das Anwachsen des Pilzes erfolgt vorzugsweise unter sterilen Bedingungen. Das mit Pilzmycel durchwachsene poröse Trägermaterial kann dann in den jeweiligen Reaktor übertragen werden, in dem der Abbau der schädlichen Substanzen erfolgt.

2.) Abbau der Ligninverbindungen bzw. organischen Chlorverbindungen: Als Reaktor kann jedes System dienen, welches eine Tränkung der Schaumstoffwürfel mit der abzubauenden Substanz bei gleichzeitiger ausreichender Sauerstoffversorgung gewährleistet. Dies können z.B. Reaktorsysteme sein, bei denen die Schaumstoffwürfel umgewälzt werden und immer wieder kurzfristig in die Lösung mit der abzubauenden Substanz tauchen, oder Tropfkörpersysteme, bei denen die Schaumstoffwürfel ruhen und ein Durchfließen der abzubauenden Substanz stattfindet. Prinzipiell kommen auch submers geführte Systeme, bei denen die Schaumstoffwürfel ständig untergetaucht sind, in Betracht.

Im erfindungsgemäßen Verfahren durchspinnt das Mycel die Poren der Schaumstoffwürfel, ist darauf fixiert und kann bei entsprechender Kultivation auch zur Pelletbildung in den Poren gebracht werden. Dadurch liegt der Pilz nicht als eine dicke, verschleimte Mycelschicht vor, sondern als freie Hyphen oder Pellets, die insgesamt eine wesentlich größere "Pilzoberfläche" bieten, welche mit der abzubauenden Substanz in Kontakt tritt. Daraus ergibt sich ein stark verbessertes Verhältnis zwischen Pilzoberfläche und Volumen der abzubauenden, sich in Lösung befindlichen Substanz. Weiterhin ist das Mycel in den Poren gut gegen Scherkräfte geschützt, sodaß eine starke Bewegung der Schaumstoffwürfel, wie z.B. in Schüttelkulturen, ohne negative Auswirkung auf die Abbauleistung des Pilzes bleibt. Darüberhinaus wird die abzubauende Lösung in den Poren in kleine Portionen aufgeteilt, wobei dennoch ein freies Volumen erhalten bleibt, das von Luft (oder reinem Sauerstoff) erfüllt ist. In Verbindung mit dieser Portionierung der Lösung wird ein gutes Eindiffundieren des Luftsauerstoffes (oder reinen Sauerstoffes) ermöglicht. Da der Abbau von Lignin ein oxidativer Vorgang ist, ist eine ausreichende Sauerstoffzufuhr zur Hyphe ein für die Abbauleistung limitierender Faktor. Diese Forderung wird im Schaumstoffsystem in idealer Weise erfüllt.

Im erfindungsgemäßen Verfahren wird weiterhin durch das Schaumstoffsystem eine ständige Benetzung des Mycels gewährleistet. Die Belüftung und der Abbau können somit gleichzeitig stattfinden.

Soweit bisher aus der Literatur bekannt ist, wird das ligninolytische Enzymsystem von Weißfäulepilzen nur in der sekundären Wachstumsphase, in der kein nennenswerter Mycelzuwachs mehr erfolgt, gebildet. Ein Zuwachsen der Poren ist, da das erfindungsgemäße Verfahren hauptsächlich in der sekundären Wachstumsphase geführt wird, nicht möglich. Somit ist das erfindungsgemäß vorgesehene Schaumstoffsystem gerade für den Einsatz zum angeführten Zweck ideal geeignet.

Das erfindungsgemäße Verfahren ergab im Labor bei Durchführung von Schüttelversuchen mit dem Pilz Phanerochaete chrysosporium und Einsatz von aus der Bleiche einer Sulfitzellstoffabrik stammendem Abwasser eine Steigerung der Abbauleistung (ausgedrückt als Farbaufhellung) von etwa 40 - 50% pro 24 Stunden im Scheibenreaktor nach der US-A-4 554 075 auf etwa 80% pro 24 Stunden im Schaumstoffsystem. Überdies wurde im Schaumstoffsystem eine weitaus höhere Konstanz der Werte erzielt. Versuche ohne zusätzliche Sauerstoffzufuhr ergaben nur etwas niedrigere Werte, was den guten Sauerstoffübergang im Schaumstoffsystem beweist.

Das erfindungsgemäße Verfahren ist für alle Aktivitäten anwendbar, die von Weißfäulepilzen entwickelt werden, insbesondere Klärung von ligninhaltigen Abwässern und ihre Dechlorierung, Dechlorierung anderer organischer Verbindungen, Produktion von Enzymen des Ligninabbaues und dergleichen.

Die im erfindungsgemäßen Verfahren bevorzugt zum Einsatz gelangenden Schaumstoffwürfel können aus beliebigen, unter den Einsatzbedingungen chemisch inerten, physikalisch beständigen und möglichst abriebarmen Schaumstoffen bestehen.

**Patentansprüche**

1. Verfahren zum Abbau von Lignin und/oder chlorierte organische Verbindungen enthaltenden Abwässern, insbesondere Bleichereiabwässern von Zellstoffabriken, durch Weißfäulepilze, dadurch gekennzeichnet, daß Weißfäulepilze, bevorzugt Phanerochaete chrysosporium, in einem porösen Trägermaterial, vorzugsweise Schaumstoffwürfeln, vorkultiviert werden und anschließend das die kultivierten Pilze enthaltende Trägermaterial mit den abzubauenden Substanzen in Kontakt gebracht wird.

2. Verfahren nach Anspruch 1, dadurch gekennzeichnet, daß zur Kultivation des Pilzes das poröse Trägermaterial mit einer ein Inokulum des Pilzes enthaltenden Nährlösung getränkt wird.

3. Verfahren nach Anspruch 1 und 2, dadurch gekennzeichnet, daß das mit Pilzmycel durchwachsene poröse Trägermaterial in einem Reaktor unter gleichzeitiger Sauerstoffversorgung mit den abzubauenden Substanzen in Kontakt gebracht wird.

4. Verfahren nach einem der Ansprüche 1 bis 3, dadurch gekennzeichnet, daß die mit Pilzmycel durchwachsenen Schaumstoffwürfel in einem Umwälzreaktor wiederholt in eine die abzubauenden Substanzen enthaltende Lösung getaucht werden.

5. Verfahren nach einem der Ansprüche 1 bis 3, dadurch gekennzeichnet, daß die mit Pilzmycel durchwachsenen Schaumstoffwürfel in einem Tropfkörpersystem von einer die abzubauenden Substanzen enthaltenden Lösung durchströmt werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | TAPPI, Band 65, Nr. 6, Juni 1982, Seiten 89-92; D.C. EATON et al.: "Method obtains fungal reduction of the color of extraction-stage kraft bleach effluents" * Seite 89, linke Spalte - mittlere Spalte, Absatz 2; Seite 91, Absatz: "Bench-scale reactor", Absatz 1 * --- | 1-5 | C 02 F 3/34 C 02 F 3/10 C 02 F 3/12 C 02 F 3/04 |
| Y | EP-A-0 091 121 (LINDE) * Seite 1, Zeile 15 - Seite 2, Zeile 19; Seite 3, Zeilen 3-9 * --- | 1-5 | |
| A | EP-A-0 100 007 (LINDE) * Titelseite, Zusammenfassung, Figur * --- | 3,4 | |
| A | EP-A-0 075 298 (LINDE) * Seite 7, Zeile 15 - Seite 8, Zeile 20 * --- | 3,4 | |
| A | US-A-3 293 174 (ICI) * Spalte 4, Ansprüche 1-8; Spalte 1, Zeile 71 - Spalte 2, Zeile 6 * ----- | 5 | **RECHERCHIERTE SACHGEBIETE (Int. Cl.4)** C 02 F |

Der vorliegende Recherchenbericht wurde für alle Patentansprüche erstellt

| Recherchenort | Abschlußdatum der Recherche | Prüfer |
|---|---|---|
| DEN HAAG | 05-07-1988 | TEPLY J. |